**Europäisches Patentamt**

**European Patent Office**

**Office européen des brevets**

(19)

(11) Veröffentlichungsnummer: **0 193 627**
**B1**

(12) # EUROPÄISCHE PATENTSCHRIFT

(45) Veröffentlichungstag der Patentschrift:
**10.08.88**

(51) Int. Cl.⁴: **A 61 C 19/04**

(21) Anmeldenummer: **85102383.8**

(22) Anmeldetag: **04.03.85**

(54) Vorrichtung zum reproduzierbaren Ausrichten eines Kiefermodells.

(43) Veröffentlichungstag der Anmeldung:
**10.09.86 Patentblatt 86/37**

(45) Bekanntmachung des Hinweises auf die Patenterteilung:
**10.08.88 Patentblatt 88/32**

(84) Benannte Vertragsstaaten:
**AT BE CH DE FR GB IT LI LU NL SE**

(56) Entgegenhaltungen:
**DE-C-348 185**
**DE-C-3 306 056**
**US-A-2 796 226**
**US-A-2 959 857**

(73) Patentinhaber: **Faber, Erich, Dr., Am Klingbach 28,
D-5552 Morbach- Bischofsdhron (DE)**

(72) Erfinder: **Faber, Erich, Dr., Am Klingbach 28,
D-5552 Morbach- Bischofsdhron (DE)**

(74) Vertreter: **Schönherr, Wolfgang, Patentanwälte
Wolfgang Schönherr Dipl.- Ing. Karl- Heinz
Serwe Hawstrasse 28, D-5500 Trier (DE)**

EP 0 193 627 B1

LIBER, STOCKHOLM 1988

**Beschreibung**

Die Erfindung betrifft eine Vorrichtung zum reproduzierbaren Ausrichten eines Kiefermodells, zum Beispiel auf eine allgemeine Bezugsachse und/oder der Zahnachsen einzelner Zahnstümpfe des Kiefermodells auf die allgemeine Bezugsachse, auf deren Sockel ein kippbarer Modelltisch mit Aufnahmeteller und Modellhalterung, in die das Kiefermodell fixierbar einsetzbar ist, um 360° drehbar aufsetzbar ist, wobei nahe ihrer Berührungsflächen am Modelltisch und an dem diesen tragenden Sockel einander zugeordnete Markierungen vorgesehen sind und wobei die Achse für die bogenförmige Kippbewegung des Modelltisches außerhalb der Vorrichtung angeordnet ist.

Zur Herstellung von Zahnprothesen ist es in der Zahnprothetik bekannt, die natürlich gewachsenen Zähne zu Zahnstumpfpfeilern auszuformen und auf diese jeweils eine Innenkrone mit konischen Außenflächen aufzuzementieren. Die Zahnprothese läßt sich dann auf die mit Innenkronen versehenen Pfeiler aufsetzen. Dabei ist es zunächst erforderlich, daß die Zahnprothese eine gemeinsame Einschubrichtung aufweist, mit der sie auf alle mit Konuskronen versehenen Pfeiler aufschiebbar ist. Da jedoch die einzelnen Zahnstümpfe unterschiedliche Neigungswinkel in unterschiedlichen Richtungen haben, müssen die Konuskronen unter Ausnutzung der Konustoleranz und unter Berücksichtigung der gemeinsamen Einschubrichtung passend ausgeformt werden.

Es ist z. B. für die Herstellung von Zahnersatz mit Konuskronen notwendig, ein den natürlichen Zahnstellungen entsprechendes Zahnmodell auf eine gemeinsame Bezugsachse auszurichten, wobei das Zahnmodell bis zu ca. 25° neigbar sein muß. Es ist ferner notwendig, die Abweichungen der Zahnlängsachsen aller Zahnstümpfe in Bezug auf die Bezugsachse zu bestimmen, wobei eine Winkelabweichung bis zu 6° gegeben sein kann. Sowohl die Lage der allgemeinen Bezugsachse als auch die Abweichungen der Zahnachsen einzelner Zahnstümpfe von der allgemeinen Bezugsachse müssen festgehalten werden, um auch nach Abnahme des Zahnmodells vom Modelltisch für andere Arbeiten später die ermittelten Lageveränderungen reproduzieren zu können.

Bei einer bekannten Vorrichtung zum Ausrichten der Zahnlängsachsen einzelner Zahnstümpfe eines Zahnmodells (DE-C-3 306 056) sind mindestens zwei aufeinanderliegende und gegeneinander drehbare Drehkörper mit ringförmigen Auflageflächen vorgesehen, wobei der Modelltisch auf die obere Auflagefläche des oberen Drehkörpers angeordnet und um 360° drehbar ist, mindestens eine Auflagefläche mindestens eines Drehkörpers schräg zur Drehachse verläuft und an den Außenseiten der Drehkörper umlaufende Markierungen angeordnet sind, derart, daß eine reproduzierbare Einstellung möglich ist.

Die praktische Erfahrung hat jedoch gezeigt, daß die erforderlichen Lageveränderungen einmal durch gleichlaufende und ein ander Mal durch entgegengesetzt laufende Drehrichtungen in einer Ebene bei vielen Zahntechnikern in der Handhabung Schwierigkeiten bereitet und daher für diesen Personenkreis unwirtschaftlich ist.

Das Auffinden der optimalen Lageveränderungen ist dadurch erschwert, daß sich beim Drehen der Drehkörper mit einer Veränderung des Neigungswinkels der Auflageflächen auch die Richtung des Neigungswinkels ändert. Die Neigungswinkel und die Neigungsrichtungen der Zahnstümpfe müssen deshalb nacheinander korrigiert werden. Die Korrektur beider Arbeitsgänge kann nicht gleichzeitig durchgeführt werden.

Es sind auch Modelltische bekannt, bei denen entweder die Modellhalterung ein Kugelgelenk aufweist oder der Aufnahmeteller in zwei Richtungen um je eine um 90° versetzte waagerechte Kippachse kippbar ist.

Bei diesen Modelltischen wird es jedoch als nachteilig empfunden, daß sie entweder überhaupt keine Markierungen aufweisen, um die einmal festgelegte Lageveränderung reproduzieren zu können, oder daß der Abstand der markierten Gradeinteilung derart eng ist, daß eine genaue wiederholbare Einstellung nicht gewährleistet ist.

Bei einer weiteren bekannten Vorrichtung (US-A-2 959 857) ist ein Aufnahmeteller auf einem Träger mit kugelzonenförmiger Außenwandung angeordnet. Der Träger ist um seine Mittelachse drehbar und kippbar in einer zylindrischen Fassung mit entsprechend geformtem oberen Rand gehalten. Mit dieser Vorrichtung läßt sich jedoch nur ein beschränkter Neigungsgrad erreichen.

Aufgabe der Erfindung ist es daher, eine Vorrichtung der eingangs genannten Art zu schaffen, die sowohl zum reproduzierbaren Ausrichten eines Kiefermodells auf eine allgemeine Bezugsachse als auch der Zahnachsen einzelner Zahnstümpfe des Kiefermodells auf die Bezugsachse verwendbar ist, wobei ihr Aufbau einfach und ein einwandfreies Ablesen der Einstellergebnisse und schnelles Wiedereinstellen früher ermittelter Lageveränderungen gewährleistet ist.

Die Aufgabe wird bei der Vorrichtung der eingangs genannten Art dadurch gelöst, daß an der Unterseite des Aufnahmetellers eine bogenförmige Kufe angeordnet ist, die auf einem Komplementärteil des Sockels mit entsprechend bogenförmiger Oberfläche aufsetzbar und entlang der die Bahn für die Kufe bildenden Oberfläche des Komplementärteils verschiebbar ist, wobei die Markierungen mindestens an einer Längsseitenfläche der Kufe und an dem Komplementärteil angeordnet sind.

Nach einer Weiterentwicklung dieser Ausführungsform weist eine der Kufen eine Längsnut auf, in die eine Rippe des Komplementärteils ragt.

Mit Hilfe der erfindungsgemäßen Vorrichtung wird ein schnelles und sicheres Reproduzieren der Lage der gemeinsamen Bezugsachse sowie der unterschiedlichen Zahnachsen eines Zahnmodells ermöglicht, wodurch die Vorratshaltung solcher Vorrichtungen, insbesondere in größeren Dentallabors wesentlich verringert werden kann.

Die Erfindung ist in den Zeichnungen beispielhaft dargestellt. Es zeigen:

Fig. 1     ein Ausführungsbeispiel der Vorrichtung in Seitenansicht,
Fig. 2     die Vorrichtung nach Fig. 1 im Schnitt II - II der Fig. 1,
Fig. 3     die Vorrichtung nach Fig. 1 in Kippstellung.

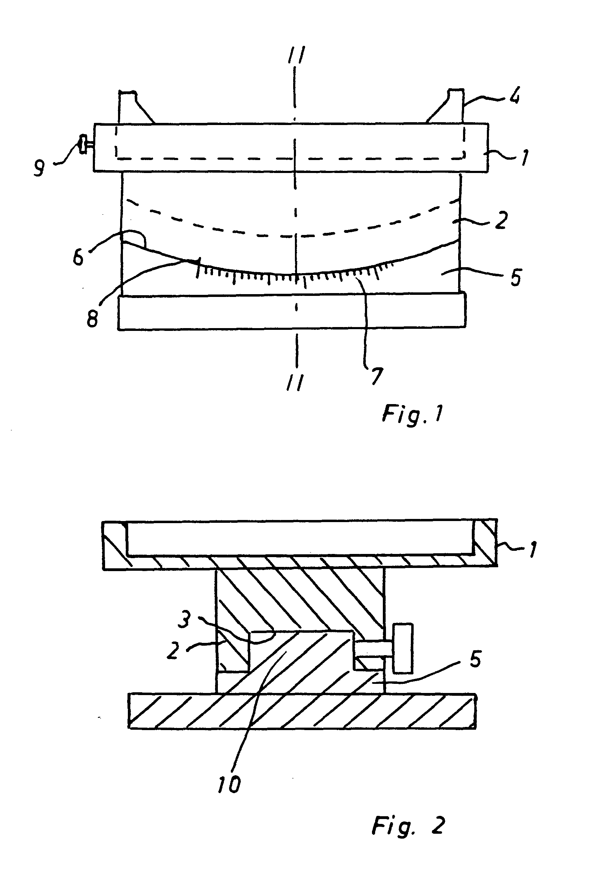

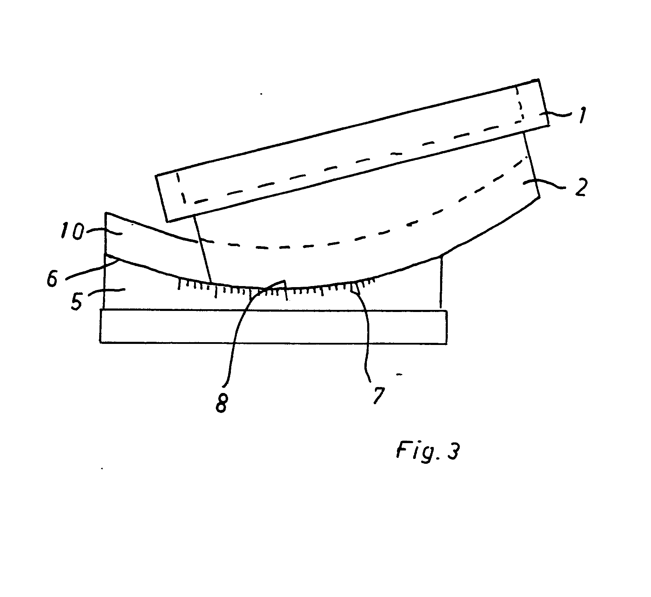

Bei der Ausführungsform nach den Fig. 1 bis 3 ist an der Unterseite eines Aufnahmetellers 1 eine konvexbogenförmige Kufe 2 angeordnet, die eine Längsnut 3 aufweist. Auf den Aufnahmeteller 1 ist eine Modellhalterung 4 eingesetzt, die auf dem Aufnahmeteller 1 um 360° drehbar und mit Hilfe einer Stellschraube 9 auf dem Aufnahmeteller 1 fixierbar ist.

Der Aufnahmeteller 1 ist mit seiner Kufe 2 auf ein als Sockel dienendes Komplementärteil 5 mit einer Rippe 10 aufgesetzt und entlang der Kufenbahn 6 derart verschiebbar, daß der Aufnahmeteller 1 von einer Stellung nach Fig. 1 in eine Stellung nach Fig. 3 gekippt wird. An der Seitenfläche der Kufe 2 und am Komplementärteil 5 sind einander zugeordnete Markierungen 7 bzw. 8 angebracht

Ferner sind den Markierungen entsprechend Rasterungen vorgesehen, so daß der in Kippstellung stehende Aufnahmeteller 1 festgehalten bleibt und die gewünschte Markierstellung eindeutig wieder reproduzierbar ist. Durch einen nicht dargstellten Anschlag kann die Kippbewegung z. B. auf 6° begrenzt werden.

Bei der Ausführungsform nach den Fig. 1 bis 3 wird ein Kippen des Aufnahmetellers 1 mit dem darauf fixierten Kiefermodell dadurch bewirkt, daß die Kufe 2 entlang der Kufenbahn 6 verschoben wird. Da die Kufenbahn nur eine geringe Krümmung aufweist, beschreibt die Kufe den Abschnitt eines verhältnismäßig großen Kreisbogen, dessen Achse außerhalb der Vorrichtung liegt.

Mit Hilfe der erfindungsgemäßen Vorrichtung lassen sich das Kiefermodell sowohl zur Bestimmung der allgemeinen Bezugsachse als auch die einzelnen Zahnstümpfe zur Bestimmung der Abweichungen der Zahnlängsachsen von der allgemeinen Bezugsachse in die gewünschte Kippstellung bringen, und die ermittelten Lageveränderungen schnell und sehr genau wieder reproduzieren. Dabei ist es auch möglich, zwei Vorrichtungen aufeinander zu setzen, um mit Hilfe der einen Vorrichtung die allgemeine Bezugsachse zu bestimmen und mit Hilfe der anderen Vorrichtung die Achsen der Zahnstümpfe auf die allgemeine Bezugsachse auszurichten.

Auch können Geräte mit unterschiedlichen Krümmungen für die Kippbewegung verwendet werden. So sind Geräte mit unterschiedlicher Kurvenbahn möglich.

**Patentansprüche**

1. Vorrichtung zum reproduzierbaren Ausrichten eines Kiefermodells, z. B. auf eine allgemeine Bezugsachse und/oder der Zahnachsen einzelner Zahnstümpfe des Kiefermodells auf die allgemeine Bezugsachse, auf deren Sockel (5) ein kippbarer Modelltisch mit Aufnahmeteller (1) und Modellhalterung (4), in die das Kiefermodell fixierbar einsetzbar ist, um 360° drehbar aufsetzbar ist, wobei nahe ihrer Berührungsflächen am Modelltisch und an dem diesen tragenden Sockel einander zugeordnete Markierungen (7, 8) vorgesehen sind und wobei die Achse für die bogenförmige Kippbewegung des Modelltisches außerhalb der Vorrichtung angeordnet ist, dadurch gekennzeichnet, daß an der Unterseite des Aufnahmetellers (1) eine bogenförmige Kufe (2) angeordnet ist, die auf einem Komplementärteil des Sockels (5) mit entsprechend bogenförmiger Oberfläche aufsetzbar und entlang der die Bahn (6) für die Kufe (2) bildenden Oberfläche des Komplementärteils verschiebbar ist, wobei die Markierungen (7, 8) mindestens an einer Längsseitenfläche der Kufe (2) und an dem Komplementärteil angeordnet sind.

2. Vorrichtung nach Anspruch 1, dadurch gekennzeichnet, daß die Kufe (2) konvexbogenförmig und das Komplementärteil des Sockels (5) mit konkaver Oberfläche ausgebildet sind.

3. Vorrichtung nach Anspruch 1, dadurch gekennzeichnet, daß die Kufe konkavbogenförmig und das Komplementärteil des Sockels mit konvexer Oberfläche ausgebildet sind.

4. Vorrichtung nach einem der Ansprüche 1 bis 3, dadurch gekennzeichnet, daß die Kufe (2) eine Längsnut (3) aufweist, in die eine Rippe (10) des Komplementärteils (5) ragt.

**Claims**

1. A device for the reproducible alignment of a model of a jaw, e.g. at a general reference axis and/or of the tooth axes of individual tooth stumps of the model of the jaw at the general reference axis, onto the base (5) of which a tiltable model table with reception plate (1) and model holder (4), into which the model of the jaw is fixably insertable, is superimposable so as to be rotatable through 360°, in which respect provided close to their contact surfaces on the model table and on the base which carries this are mutually associated markings (7, 8) and in which respect the axis for the arcuate tilting movement of the model table is arranged outside the device, characterised in that arranged on the underside of the reception plate (1) is an arcuate runner (2) which is superimposable on a complementary part of the base (5) having a correspondingly arcuate upper surface and is displaceable along the upper surface, forming the track (6) for the runner (2), of the complementary part, the markings (7, 8) being arranged at least on one longitudinal side surface of the runner (2) and on the complementary part.

2. A device according to claim 1, characterised in that the runner (2) is convex-arcuate in design and the complementary part of the base (5) is designed with a concave upper surface.

3. A device according to claim 1, characterised in that the runner is concave-arcuate in design and the complementary part of the base is designed with a convex upper surface.

4. A device according to one of claims 1 to 3, characterised in that the runner (2) has a longitudinal groove (3) into which a rib (10) of the complementary part (5) projects.

## Revendications

1. Dispositif pour réaliser de façon reproductible un modèle de mâchoire, par exemple sur un axe de référence général et/ou les axes de dents de divers moignons dentaires du modèle de mâchoire sur un axe de référence général, comprenant une embase (5) qui porte une table basculante à plateau récepteur (1) et à porte-modèle (4), susceptible de recevoir le modèle de mâchoire pour le faire tourner sur 360° et l'immobiliser à la position voulue, alors que, près des surfaces de contact entre la table du modèle et le socle qui la porte, se font face des repères (7), (8), l'axe théorique pour le basculement en arc-de-cercle de la table étant situé hors du dispositif, caractérisé en ce qu'à la partie inférieure de la table à plateau (1), se trouve un sabot (2) à profil en arc-de-cercle qui porte sur un profil complémentaire en arc-de-cercle de l'embase (5), le long duquel le sabot (2) peut coulisser en basculant suivant une piste (6), les repères (7) et (8) figurant au moins sur l'une des faces latérales longitudinales du sabot (2) et sur la face correspondante du profil complémentaire.

2. Dispositif suivant la revendication 1, cartactérisé en ce que le sabot (2) a un profil convexe en arc-de-cercle, alors que la partie complémentaire de l'embase (5) a une surface concave en arc-de-cercle.

3. Dispositif suivant la revendication 1, caractérise en ce que le sabot (2) a un profil concave en arc-de-cercle, alors que la partie complémentaire de l'embase (5) a une surface convexe en arc-de-cercle.

4. Dispositif suivant l'une quelconque des revendications 1 à 3 , caractérisé en ce que le sabot (2) présente une mortaise longitudinale (3) dans laquelle est engagée une nervure correspondante (10) de la partie complémentaire de l'embase (5).

0 193 627

Fig. 1

Fig. 2

*Fig. 3*